**Europäisches Patentamt**

**European Patent Office**

**Office européen des brevets**

(11) Veröffentlichungsnummer: **0 256 413**

**A2**

## (12) EUROPÄISCHE PATENTANMELDUNG

(21) Anmeldenummer: **87111212.4**

(22) Anmeldetag: **04.08.87**

(51) Int. Cl.⁴: **F25J 3/08** , //C01B3/52

(30) Priorität: **13.08.86 DE 3627427**

(43) Veröffentlichungstag der Anmeldung:
**24.02.88 Patentblatt 88/08**

(84) Benannte Vertragsstaaten:
**DE GB NL SE**

(71) Anmelder: **Linde Aktiengesellschaft**
**Abraham-Lincoln-Strasse 21**
**D-6200 Wiesbaden(DE)**

(72) Erfinder: **Bauer, Heinz, Dr. rer. nat.**
**Nibelungenstrasse 6**
**D-8000 München 19(DE)**
Erfinder: **Becker, Hans, Dr. Ing.**
**Zwengauerweg 9**
**D-8000 München 71(DE)**
Erfinder: **Scholz, Walter, Dipl.-Ing.**
**Moosbauerweg 34**
**D-8190 Wolfratshausen(DE)**

(74) Vertreter: **Schaefer, Gerhard, Dr.**
**Linde Aktiengesellschaft Zentrale**
**Patentabteilung**
**D-8023 Höllriegelskreuth(DE)**

(54) **Verfahren zur Reinigung eines Gasstroms durch eine Stickstoffwäsche.**

(57) Vorgeschlagen wird ein Verfahren zur Reinigung eines Gasstroms bei erhöhtem durch eine Stickstoffwäsche. Der zu reinigende Gasstrom und Stickstoff werden auf tiefe Temperaturen abgekühlt, der Gasstrom dann mit flüssigem Stickstoff gewaschen und der gereinigte Gasstrom mit weiterem abgekühlten, unter erhöhtem Druck stehenden Stickstoff unter Bildung eines Gemischs, in dem Stickstoff teilweise in flüssiger Form anfällt, vermischt. Das dabei gebildete Gemisch wird anschließend wieder angewärmt, wobei der darin enthaltene flüssige Stickstoff verdampft wird. Entweder der abzukühlende Stickstoffstrom selbst oder ein Teilstrom des Stickstoffstroms oder ein weiterer Prozeßstrom wird unter einem niedrigeren Druck als dem Arbeitsdruck der Stickstoffwäsche zumindest teilweise kondensiert und danach auf höheren Druck gepumpt.

EP 0 256 413 A2

## Verfahren zu Reinigung eines Gasstroms durch eine Stickstoffwäsche

Die Erfindung betrifft ein Verfahren zur Reinigung eines Gasstroms bei erhöhtem Druck durch eine Stickstoffwäsche, bei dem der Gasstrom und Stickstoff auf tiefe Temperaturen abgekühlt werden, der Gasstrom dan mit flüssigem Stickstoff gewaschen und der gereinigte Gasstrom mit weiterem abgekühlten, unter erhöhtem Druck stehenden Stickstoff unter Bildung eines Gemischs, in dem Stickstoff teilweise in flüssiger Form anfällt, vermischt wird, bevor das dabei gebildete Gasgemisch durch Wärmetausch mit dem abzukühlenden Gasstrom und dem abzukühlenden Stickstoff wieder angewärmt wird.

Stickstoffwäschen werden insbesondere bei der Erzeugung von Ammoniaksynthesegas eingesetzt, wobei ein Rohwasserstoffstrom, der noch geringe Mengen an beispielsweise Kohlenmonoxid, Methan, Argon und anderen Komponenten, die in der Ammoniaksynthese stören oder unerwünschte Ballaststoffe darstellen, enthält, mit flüssigem Stickstoff gewaschen wird. Dabei fällt ein gereinigter Wasserstoffstrom an, der im wesentlichen nur noch mit einem Teil des Waschstickstoffs beladen ist. Da die bei der Wäsche von Wasserstoff aufgenommene Stickstoffmenge nicht ausreicht, um das für die Ammoniaksynthese erforderliche stöchiometrische Verhältnis von Stickstoff zu Wasserstoff einzustellen, wird nach einem bekannten Verfahren dem aus der Wäsche austretenden kalten Gasstrom weiterer kalter Stickstoff zugemischt und dieses Gemisch dann wieder angewärmt (DE-PS 63 297).

Bei einem derartigen Verfahren werden der Wasserstoff und der Stickstoff üblicherweise unter im wesentlichen dem gleichen Druck abgekühlt, beispielsweise bei einem Druck zwischen 10 und 150 bar, inbesondere bei Drücken zwischen 20 und 80 bar. Der Stickstoff wird bei der Abkühlung kondensiert oder, je nach Druckniveau, überkritisch abgekühlt. Bei seiner Einspeisung in die Waschsäule bzw. bei der Vermischung mit dem gereinigten Gas entsteht dann aber ein in jedem Fall unterkritisches Gemisch, wobei eine flüssige, stickstoffreiche Phase anfällt.

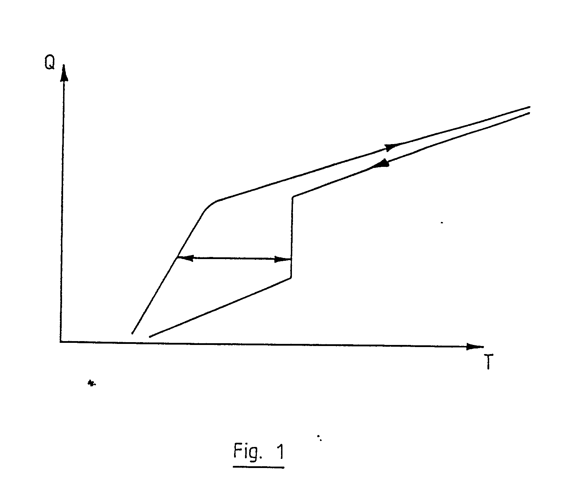

Ein Nachteil der bekannten Verfahrensführung ist darin zu sehen, daß im Bereich des kalten Endes des Prozesses, also im kältesten Teil des der Stickstoffwäsche vorgeschalteten Wärmetauscher, große Temperaturdifferenzen auftreten, die dadurch bedingt sind, daß der im Gemisch enthaltene flüssige Stickstoffanteil bei seinem relativ niedrigen Partialdruck und dem entsprechend bei einer sehr tiefen Temperatur verdampft, während der unter höherem (Partial-) Druck stehende abzukühlende Stickstoff bei höherer Temperatur kondensiert bzw. überkritisch abgekühlt wird. Dies sei anhand der Figur 1 verdeutlicht, in der die Q-T-Verläufe qualitativ angegeben sind. In der Stickstoff-Abkühlkurve tritt dabei bei der Kondensationstemperatur ein scharfer Knick auf, der bei überkritischem Zustand des Stickstoffs zwar etwas abgeflacht wird, ohne daß sich dabei jedoch qualitativ entscheidendes verändert, solange man nicht zu sehr hohen Drücken übergeht. Die Verdampfung und Anwärmung des Stickstoffs im Gemisch erfolgt dagegen bei gleitender Temperatur und demgemäß bei einem relativ flachen Verlauf der Anwärmkurve, wodurch große Abstände zwischen der Anwärm-und Abkühlkurve zwangsläufig auftreten. Die dadurch im Bereich des kalten Endes des Wärmetauschers auftretenden Temperaturdifferenzen erreichen teilweise Werte von über 20°C und sind daher mit großen Energieverlusten verbunden.

Der Erfindung liegt die Aufgabe zugrunde, ein Verfahren der eingangs genannten Art so auszugestalten, daß die Temperaturdifferenz im Bereich des kalten Endes des Wärmetauschers und damit die dort auftretende Exergieverluste reduziert werden.

Diese Aufgabe wird dadurch gelöst, daß der im Gemisch enthaltene flüssige Stickstoff durch Wärmetausch mit dem abzukühlenden Gasstrom und dem abzukühlenden Stickstoff verdampft wird, wobei entweder der abzukühlende Stickstoffstrom selbst oder ein Teilstrom des Stickstoffstroms oder ein weiterer Prozeßstrom unter einem niedrigeren Druck als dem Arbeitsdruck der Stickstoffwäsche zumindest teilweise kondensiert und danach auf höheren Druck gepumpt wird.

Erfindungsgemäß wird damit gegenüber der üblichen Verfahrensweise ergänzend vorgeschlagen, die Verdampfungswärme des im Gemisch enthaltenen, durch die Entspannung auf den im Gemisch herrschenden Partialdruck verflüssigten Stickstoffs zur Kondensation eines Niederdruck-Prozeßstroms zu nutzen, wobei in der Auswahl eines geeigneten Niederdruckstroms zunächst eine große Freiheit besteht. Durch die beim erfindungsgemäßen Verfahren möglichen geringen Temperaturdifferenzen im Bereich des kalten Endes des Wärmetauschers ist es möglich an dieser Stelle Exergie einzusparen, die entweder dazu verwendet werden kann, den Energiebedarf der Gesamtanlage zu verkleinern oder größere Temperaturdifferenzen am warmen Ende der Wärmetauscher zuzulassen. Letztere Möglichkeit führt zu eiem deutlich kleinerem Wärmetauscher. Selbstverständlich kann man von beiden, einander entgegenlaufenden Möglichkeiten auch nur teilweise Gebrauch machen, um ein wirtschaftliches Optimum zu erreichen.

In einer ersten bevorzugten Ausführungsform der Erfindung wird der zusätzliche Kondensationsschritt mit Niederdruckstickstoff bewirkt. Hierzu wird ein Stickstoffstrom bei niedrigem Druck abgekühlt und kondensiert und danach mittels einer Pumpe auf den Druck des für die Stickstoffwäsche herangeführten Stickstoffs gepumpt und mit diesem Stickstoff nach seiner Abkühlung vermischt. Diese Verfahrensführung hat den Vorteil, daß dadurch der unter erhöhtem Druck herangeführte Stickstoffstrom verkleinert werden kann, wodurch die für die Verdichtung des Hochdruckstickstoffs erforderliche Energie reduziert wird. An die Stelle der aufwendigen Gasverdichtung tritt stattdessen die energetisch viel günstiger durchzuführende Förderung des kondensierten Niederdruckstickstoffs mittels einer Pumpe auf den Druck des Hochdruckstickstoffs.

In einer weiteren bevorzugten Ausführungsform der Erfindung wird vom Hochdruckstickstoff ein Teilstrom abgezweigt, arbeitsleistend auf niedrigen Druck entspannt und dann erfindungsgemäß kondensiert. Der dabei anfallende flüssige Stickstoff wird ebenfalls wieder mittels einer Pumpe auf den Druck des Hochdruckstickstoffs gefördert und vor der Stickstoffwäsche mit ihm vermischt. Bei dieser Verfahrensführung muß zunächst der gesamte Stickstoffstrom auf den erhöhten Druck verdichtet werden, aber dafür fällt bei der arbeitsleistenden Entspannung des abgezweigten Teilstroms zusätzliche Energie und Kälte an.

In einer dritten bevorzugten Ausführungsform der Erfindung ist es überhaupt nicht erforderlich, den Stickstoffstrom bis auf den erhöhten Verfahrensdruck der Stickstoffwäsche zu verdichten. Bei dieser Ausführungsform wird ein bei einem tieferen Zwischendruck bereitgestellter Stickstoffstrom zunächst arbeitsleistend entspannt und dann erfindungsgemäß kondensiert, woraufhin der dabei anfallende flüssige Stickstoff auf den erforderlichen hohen Druck gepumpt wird.

In einer weiteren bevorzugten Ausführungsform der Erfindung wird die erfindungsgemäße Kondensation eines Niederdruck-Prozeßstroms unter Einschaltung eines Kreislaufs bewirkt, in dem ein Arbeitsmedium bei hohem Druck verdampft, danach arbeitsleistend entspannt, dann bei niedrigem Druck kondensiert und schließlich wieder auf den hohen Druck gepumpt wird. Als Arbeitsmedium kommt dabei insbesondere Stickstoff oder das bei einer Stickstoffwäsche im Sumpf der Waschsäule anfallende Restgas in Frage. Das Arbeitsmedium kann dabei sowohl in einem geschlossenen als auch in einem offenen Kreislauf geführt werden.

Wird es in einem offenen Kreislauf geführt, so empfiehlt sich insbesondere das Restgas der Stickstoffwäsche als Arbeitsmedium. Das im Sumpf der Stickstoffwäsche anfallende Restgas wird dabei in vorteilhafter Weise zunächst unter Druck verdampft, danach arbeitsleistend entspannt und partiell kondensiert. Die dabei gebildete Flüssigphase wird dann wieder mittels einer Pumpe auf den Restgasdruck gefördert und im offenen Kreislauf gefahren. Eine der Zuführung frischen Restgases entsprechende Menge muß aus dem Kreislauf ausgeschleust werden, was vorzugsweise im Anschluß an die arbeitsleistende Entspannung erfolgt. Bei einer solchen Verfahrensführung ist es weiterhin günstig, die Vermischung des Kreislaufmediums mit dem Restgas nach der Verdampfung des Kreislaufmediums bei erhöhtem Druck vorzunehmen.

Weitere Einzelheiten der Erfindung werden nachfolgend anhand der in den Figuren schematisch dargestellten Ausführungsbeispiele erläutert.

Es zeigen:

Figur 1 ein Gesamt-Q-T-Diagramm mit der Abkühlkurve für den Gasstrom (Rohgas) und den Hochdruckstickstoff und der Anwärmkurve für das aus der Stickstoffwäsche austretende Gemisch und das Restgas.(entsprechend dem Stand der Technik),

Figur 2 eine erste Ausführungsform des erfindungsgemäßen Verfahrens,

Figur 3 eine weitere Ausführungsform des erfindungsgemäßen Verfahrens,

Figur 4 eine weitere Ausführungsform des erfindungsgemäßen Verfahrens,

Figur 5 eine weitere Ausführungsform des erfindungsgemäßen Verfahrens mit einem geschlossenen Kreislauf und

Figur 6 eine weitere Ausführungsform des Erfindung mit einem offenen Kreislauf.

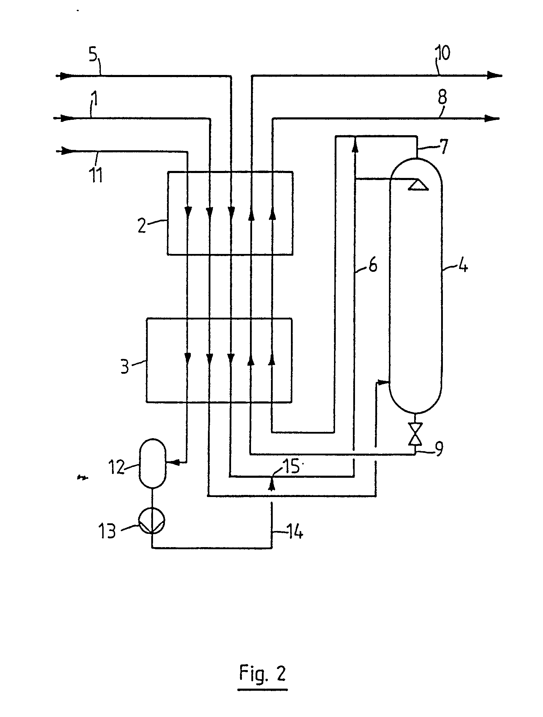

Bei dem in Figur 2 dargestellten Ausführungsbeispiel der Erfindung wird das zu reinigende Rohgas über Leitung 1 zugeführt, zunächst im Wärmetauscher 2 und danach im Wärmetauscher 3 auf tiefe Temperaturen abgekühlt und dann in den unteren Bereich einer Stickstoff-Waschsäule 4 eingespeist. Parallel dazu wird über Leitung 5 Hochdruck-Stickstoff, der etwa unter dem gleichen Druck wie das Rohgas in Leitung 1 steht, zugeführt und nach Abkühlung in den Wärmetauschern 2 und 3 über Leitung 6 zum Kopf der Stickstoff-Waschsäule 4 geführt, wo ein Teil des Hochdruckstickstoffs als Waschflüssigkeit aufgegeben wird. Der in vielen Fällen überkritische Stickstoff bildet bei Einspeisung in die Stickstoff-Waschsäule 4 mit dem Rohgas ein unterkritisches Gemisch , wobei sich eine stickstoffreiche, flüssige Phase bildet. Diese Flüssigkeit durchströmt die Waschsäule im Gegenstrom zum aufsteigenden Gasgemisch und wäscht dabei störende Komponenten des Gasgemisches aus, beispielsweise Kohlenmonoxid, Methan, Argon oder andere Verunreinigungen aus einem Wasserstoffstrom. Das gereinigte Gasgemisch tritt über Leitung 7 am Kopf der Stickstoff-Waschsäule 4 aus und wird mit einem weiteren Teilstrom des über Leitung 6 herangeführten abgekühlten Hochdruck-Stickstoffs vermischt, beispielsweise um bei einer Wasserstoffreinigung zur Herstellung von Ammoniaksynthesegas das für die Ammoniaksynthese erforderliche stöchiometrische Verhältnis zwischen Wasserstoff und Stickstoff einzustellen. Bei der Vermischung bildet der über Leitung 6 herangeführte Stickstoff ebenfalls ein unterkritisches Gemisch mit dem Kopfprodukt der Kolonne, wodurch wiederum eine überwiegend Stickstoff enthaltende Flüssigkeit entsteht. Das Zweiphasen-Gemisch wird im Gegenstrom zu abzukühlenden Gasströmen in den Wärmetauschern 3 und 2 angewärmt, wobei der Flüssiganteil im unteren Bereich des Wärmetauschers 3, d.h. im Bereich des kalten Endes des Prozesses, verdampft wird. Das angewärmte Gasgemisch wird schließlich über Leitung 8 als Produktstrom abgezogen.

Im Sumpf der Stickstoff-Waschsäule 4 fällt mit ausgewaschenen Komponenten beladener Waschstickstoff an, der über Leitung 9 abgezogen, im Wärmetauscher 3 verdampft und angewärmt sowie nach weiterer Anwärmung im Wärmetauscher 2 - schließlich über Leitung 10 als Restgas abgegeben wird.

Gegenüber dem bisher beschriebenen Teil der in Figur 2 dargestellten Ausführungsform, der einer konventionellen Stickstoffwäsche entspricht, wird erfindungsgemäß zusätzlich noch ein über Leitung 11 herangeführter Niederdruck-Stickstoffstrom zugeführt und in den Wärmetauschern 2 und 3 abgekühlt bzw. kondensiert. Das Kondensat wird im Behälter 12 gesammelt und über die Pumpe 13 auf den Druck des Hochdruck-Stickstoffstroms in Leitung 5 gefördert. Anschließend wird es über Leitung 14 bei 15 in den kalten Hochdruck-Stickstoffstrom eingespeist, so daß es gemeinsam mit dem Hochdruck-Stickstoffstrom über Leitung 6 der Stickstoffwäsche zugeführt wird.

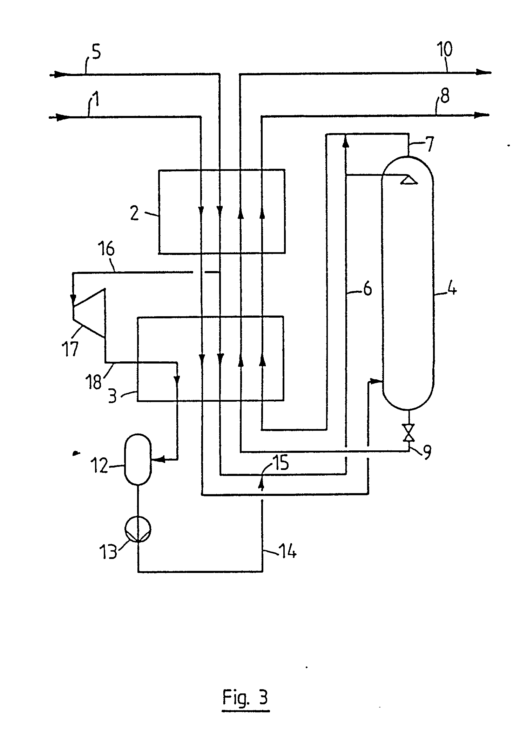

Die in Figur 3 dargestellte Ausführungsform der Erfindung unterscheidet sich von derjenigen gemäß Figur 2 dadurch, daß kein separater Niederdruck-Stickstoffstrom bereitgestellt wird, sondern daß stattdessen vom, Hochdruck-Stickstoffstrom in Leitung 5 nach der Vorkühlung im Wärmetauscher 2 ein Teilstrom 16 abgezweigt und in einer Entspannungsturbine 17 arbeitsleistend entspannt wird. Das dabei anfallende kalte Niederdruckgas wird über Leitung 18 dem kalten Teil des Wärmetauschers 3 zugeführt und darin kondensiert. Das dabei gebildete Kondensat wird wiederum wie bei der Ausführungsform gemäß Figur 2 weiter behandelt.

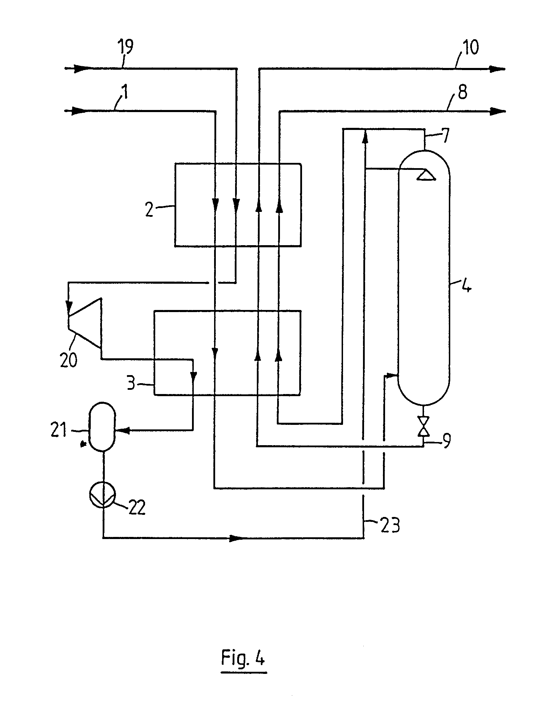

Bei der in Figur 4 dargestellten Ausführungsform der Erfindung wird über Leitung 19 ein Mitteldruck-Stickstoffstrom zugeführt, der nach Abkühlung im Wärmetauscher 2 in seiner Gesamtheit in einer Entspannungsturbine 20 entspannt wird. Das dabei anfallende kalte Niederdruckgas wird wiederum im Wärmetauscher 3 kondensiert und über einen Behälter 21 einer Pumpe 22 zugeführt und auf den Druck der Stickstoffwäsche gepumpt, bevor es über Leitung 23 zur Stickstoffwäsche 4 geleitet wird.

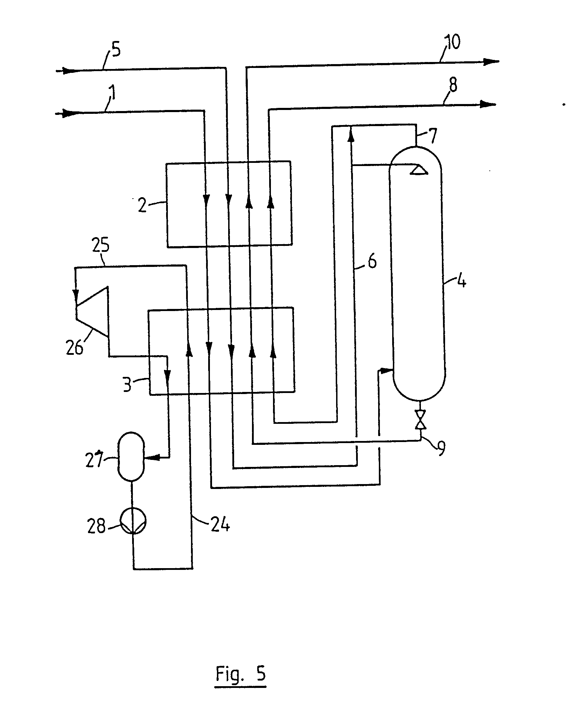

Bei der Ausführungsform gemäß Figur 5 wird über den kalten Wärmetauscher 3 ein geschlossener Kreislauf geführt, in dem ein Arbeitsmedium in Leitung 24 unter Druck im Wärmetauscher 3 verdampft wird, wonach es über Leitung 25 einer Expansionsturbine 26 zugeführt und darin arbeitsleistend entspannt wird. Das entspannte Niederdruck-Arbeits-medium wird dann im kalten Teil des Wärmetauschers 3 kondensiert und über einen Behälter 27 durch eine Pumpe 28 wieder auf den erhöhten Druck gefördert und über Leitung 24 erneut im Kreislauf gefahren.

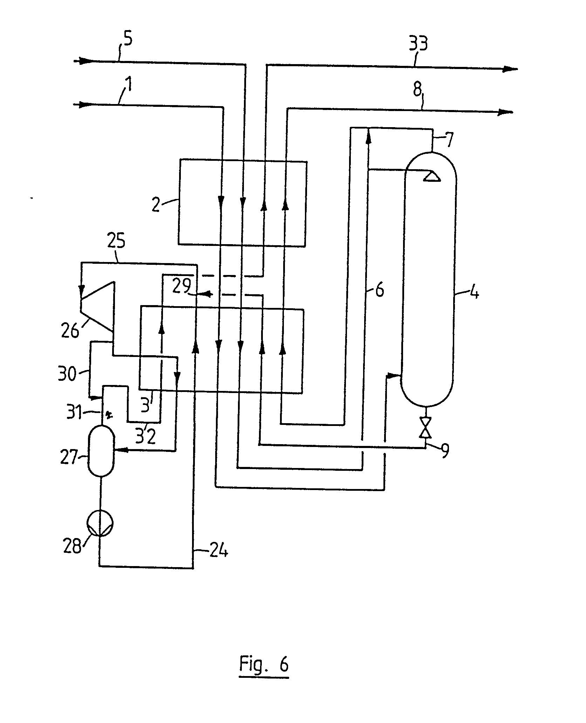

Die in Figur 6 dargestellte Ausführungsform der Erfindung unterscheidet sich von derjenigen gemäß Figur 5 dadurch, daß der Kreislauf offen gestaltet ist und das über Leitung 9 aus der Stickstoff-Waschsäule 4 abgezogene Restgas als Arbeitsmedium enthält. Das über Leitung 9 abgezogene Restgas wird dabei zunächst im Wärmetauscher 3 verdampft und dann bei 29 in den Kreislauf eingespeist. Nach der arbeitsleistenden Entspannung des Gemisches aus Kreislaufgas und Restgas wird ein überschüssiger Teil über Leitung 30 abgezweigt und mit Komponenten, die bei der Kondensation im Wärmetauscher 3 nicht in flüssiger Form anfallen und die aus dem Behälter 27 abgetrennt und über Leitung 31 abgezogen werden, vermischt. Das Gasgemisch wird über Leitung 32 abgezogen, in den Wärmetauschern 2 und 3 angewärmt und schließlich über Leitung 33 als Restgas abgegeben.

## Ansprüche

1. Verfahren zur Reinigung eines Gasstroms bei erhöhtem Druck durch eine Stickstoffwäsche, bei dem der Gasstrom und Stickstoff auf tiefe Temperaturen abgekühlt werden, der Gasstrom dann mit flüssigem Stickstoff gewaschen und der gereinigte Gasstrom mit weiterem abgekühltem, unter erhöhtem Druck stehenden Stickstoff unter Bildung eines Gemischs, in dem Stickstoff teilweise in flüssiger Form anfällt, vermischt wird, bevor das dabei gebildete Gemisch durch Wärmetausch mit dem abzukühlenden Gasstrom und dem abzukühlenden Stickstoff wieder angewärmt wird, dadurch gekennzeichnet, daß der im Gemisch enthaltene flüssige Stickstoff durch Wärmetausch mit dem abzukühlenden Gasstrom und dem abzukühlenden Stickstoff verdampft wird, wobei entweder der abzukühlende Stickstoffstrom selbst oder ein Teilstrom des Stickstoffstroms oder ein weiterer Prozeßstrom unter einem niedrigeren Druck als dem Arbeitsdruck der Stickstoffwäsche zumindest teilweise kondensiert und danach auf höheren Druck gepumpt wird.

2. Verfahren nach Anspruch 1, dadurch gekennzeichnet, daß ein unter niedrigerem Druck als der Arbeitsdruck der Stickstoffwäsche stehender Stickstoffstrom nach seiner Kondenstaion auf den Arbeitsdruck der Stickstoffwäsche gepumpt und mit einem zweiten unter dem Arbeitsdruck der Stickstoffwäsche stehenden Stickstoffstrom vermischt oder wie dieser verwendet wird.

3. Verhahren nach Anspruch 1 oder 2, dadurch gekennzeichnet, daß der unter einem niedrigeren Druck als dem Arbeitsdruck der N2-Wäsche stehende Stickstoffstrom durch arbeitsleistende Entspannung eines Teilstroms des unter dem Arbeitsdruck der N2-Wäsche stehenden N2-Strom gebildet wird.

4. Verfahren nach Anspruch 1, dadurch gekennzeichnet, daß der Stickstoff bei einem unterhalb des Drucks der Stickstoffwäsche liegenden Druck zugeführt und zunächst teilweise abgekühlt wird, danach arbeitsleistend entspannt, durch weiteren Wärmetausch mit dem Gasgemisch kondensiert und danach auf den Druck der Stickstoffwäsche gepumpt wird.

5. Verfahren nach Anspruch 1, dadurch gekennzeichnet, daß ein Arbeitsmedium in einem Kreislauf bei hohem Druck verdampft, arbeitsleistend entspannt, bei niedrigem Druck kondensiert und wieder auf den hohen Druck gepumpt wird, wobei die Verdampfung und Kondensation des Arbeitsmediums im Wärmetausch mit anzuwärmenden bzw. abzukühlenden Prozeßströmen erfolgt.

6. Verfahren nach Anspruch 5, dadurch gekennziechnet, daß der Kreislauf geschlossen ist und Stickstoff oder im Sumpf der Stickstoffwäsche als Restgas anfallendes Gemisch als Arbeitsmedium enthält.

7. Verfahren nach Anspruch 5, dadurch gekennzeichnet, daß Restgas aus der Stickstoffwäsche als Arbeitsmedium in einem offenen Kreislauf verwendet wird.

8. Verfahren nach Anspruch 7, dadurch gekennzeichnet, daß das Restgas der Stickstoffwäsche verdampft, danach arbeitsleistend entspannt, partiell kondensiert und die dabei gebildete Flüssigphase auf Restgasdruck gepumpt und wieder mit dem Restgas vermischt wird.

9. Verfahren nach Anspruch 8, dadurch gekennzeichnet, daß die Flüssigphase vor der Vermischung verdampft wird.

10. Verfahren nach Anspruch 8 oder 9, dadurch gekennzeichnet, daß überschüssiges Restgas nach der asrbeitsleistenden Entspannung aus dem Kreislauf ausgeschleust wird.

Fig. 1

Fig. 2

(H 1673)   H 86/75   Bl.

Fig. 3

Fig. 4

( H 1673 )   H 86/75   Bl.

Fig. 5

( H 1673)   H 86/75   Bl.

Fig. 6